# EUROPÄISCHE PATENTSCHRIFT

(11) **EP 3 433 134 B1**
(45) Veröffentlichungstag und Bekanntmachung des Hinweises auf die Patenterteilung: **04.12.2019**
(21) Anmeldenummer: 17707221.2
(22) Anmeldetag: 21.02.2017
(51) Int. Cl.: B60R 16/03, B60G 21/055

(54) **STEUERVORRICHTUNG FÜR EINE FAHRWERKSKOMPONENTE UND FAHRWERKSKOMPONENTE FÜR EIN FAHRZEUG**
CONTROL DEVICE FOR A SUSPENSION COMPONENT AND SUSPENSION COMPONENT FOR A VEHICLE
DISPOSITIF DE COMMANDE POUR ÉLÉMENT DE SUSPENSION ET ÉLÉMENT DE SUSPENSION POUR UN VÉHICULE

(30) Priorität: 21.03.2016 DE 102016204591
(43) Veröffentlichungstag der Anmeldung: 30.01.2019
(73) Patentinhaber: ZF Friedrichshafen AG, 88046 Friedrichshafen (DE)
(72) Erfinder: HEGEDÜS-BITE, Istvan, 88097 Eriskirch (DE); GRODDE, Benjamin, 88212 Ravensburg (DE)
(86) Internationale Anmeldenummer: PCT/EP2017/053939
(87) Internationale Veröffentlichungsnummer: WO 2017/162391

(56) Entgegenhaltungen:
- DE-A1-102007 015 995
- DE-A1-102009 032 084
- DE-A1-102013 221 577
- DE-A1-102013 224 800

## Beschreibung

Die vorliegende Erfindung bezieht sich auf eine Steuervorrichtung für eine Fahrwerkskomponente und auf eine Fahrwerkskomponente, beispielsweise einen Wankstabilisator oder eine Lenkeinrichtung für ein Fahrzeug.

Fahrzeuge weisen teilweise zwei Bordnetze auf, beispielsweise ein Bordnetz mit einer Spannung von 12V und ein Bordnetz mit einer Spannung von 48V.

Die DE 10 2013 221 577 A1 offenbart eine elektronische Vorrichtung für ein Fahrzeug. Die Vorrichtung umfasst ein Leistungselement und eine Steuerschaltung zum Steuern des Leistungselements. Das Leistungselement ist über eine erste Spannungsschnittstelle und die Steuerschaltung sowohl über die erste Spannungsschnittstelle als auch über eine unter Verwendung eines Trennelements galvanisch getrennte zweite Spannungsschnittstelle betreibbar.

Die DE 10 2007 015 995 A1 offenbart ein Achsmodul für ein Fahrzeug, wobei das Achsmodul einen elektrischen Aktuator, einen Sensor und ein elektrisches Bordnetz aufweist, welches ein Leistungsbordnetz und einen ersten Kommunikationsbus enthält.

Vor diesem Hintergrund schafft die vorliegende Erfindung eine verbesserte Steuervorrichtung für eine Fahrwerkskomponente und eine verbesserte Fahrwerkskomponente für ein Fahrzeug gemäß den Hauptansprüchen. Vorteilhafte Ausgestaltungen ergeben sich aus den Unteransprüchen und der nachfolgenden Beschreibung.

Eine Steuervorrichtung für eine Fahrwerkskomponente kann vorteilhafterweise mit zwei unterschiedlichen Versorgungsspannungen versorgt werden, die beispielsweise von zwei unterschiedlichen Bordnetzen eines Fahrzeugs bereitgestellt werden können. Werden die einzelnen Einrichtungen einer Steuervorrichtung für eine Fahrwerkskomponente geeignet auf die den unterschiedlichen Versorgungsspannungen zugeordneten Potenzialseiten der Steuervorrichtung verteilt, so können beispielsweise Signallaufzeiten innerhalb der Steuervorrichtung verkürzt werden. Befinden sich eine Endstufeneinrichtung der Steuervorrichtung und eine Steuer-einrichtung zum Ansteuern der Endstufeneinrichtung auf derselben Potenzialseite, so kann eine sehr schnelle Signalübertragung zwischen Steuereinrichtung und Endstufeneinrichtung gewährleistet werden.

Eine Steuervorrichtung für eine Fahrwerkskomponente für ein Fahrzeug weist die folgenden Merkmale auf:
einen ersten Versorgungsspannungsanschluss zum Versorgen der Steuervorrichtung mit einer ersten Versorgungsspannung, wobei der erste
Versorgungsspannungsanschluss einer ersten Potenzialseite der Steuervorrichtung zugeordnet ist;
einen zweiten Versorgungsspannungsanschluss zum Versorgen der Steuervorrichtung mit einer zweiten Versorgungsspannung, wobei der zweite Versorgungsspannungsanschluss einer zweiten Potenzialseite der Steuervorrichtung zugeordnet ist;
einen Aktuatoranschluss zum Bereitstellen eines Wechselsignals zum Betreiben eines Aktuators der Fahrwerkskomponente, wobei der Aktuatoranschluss der ersten Potenzialseite der Steuervorrichtung zugeordnet ist;
eine Endstufeneinrichtung, die zwischen den ersten Versorgungsspannungsanschluss und den Aktuatoranschluss geschaltet ist und ausgebildet ist, um das Wechselsignal unter Verwendung der ersten Versorgungsspannung bereitzustellen, wobei die Endstufeneinrichtung der ersten Potenzialseite der Steuervorrichtung zugeordnet ist;
eine Spannungsversorgungseinrichtung, die ausgebildet ist, um wahlweise unter Verwendung der ersten Versorgungsspannung oder der zweiten Versorgungsspannung eine Betriebsspannung bereitzustellen, wobei die Spannungsversorgungseinrichtung der ersten Potenzialseite der Steuervorrichtung zugeordnet ist;
eine galvanische Trenneinrichtung die zwischen den zweiten Versorgungsspannungsanschluss und die Spannungsversorgungseinrichtung geschaltet ist, und ausgebildet ist, um die erste Potenzialseite galvanisch von der zweiten Potenzialseite zu trennen; und
eine Steuereinrichtung, die ausgebildet ist, um unter Verwendung der Betriebsspannung ein Steuersignal zum Steuern der Endstufeneinrichtung bereitzustellen, wobei die Steuereinrichtung der ersten Potenzialseite zugeordnet ist.

Unter einer Steuervorrichtung kann ein elektrisches Gerät, beispielsweise ein Steuergerät verstanden werden. Über die Versorgungsspannungsanschlüsse kann die Steuervorrichtung mit unterschiedlichen Versorgungsspannungen versorgt werden, die beispielsweise von zwei Bordnetzen eines Fahrzeugs bereitgestellt werden können. Die Steuervorrichtung kann in zwei unterschiedliche und galvanisch voneinander getrennte Potenzialseiten aufgeteilt sein, wobei der erste Versorgungsspannungsanschluss der ersten Potenzialseite und der zweite Versorgungsspannungsanschluss der zweiten Potenzialseite zugeordnet ist. Die Steuervorrichtung kann ausgebildet sein, um das Wechselsignal zum Betreiben des Aktuators unter Verwendung der ersten Versorgungsspannung an dem Aktuatoranschluss bereitzustellen. Bei dem Wechselsignal kann es sich beispielsweise um einen Wechselstrom oder eine Wechselspannung handeln. Bei dem Aktuator kann es sich um einen Elektromotor, gemäß einer Ausführungsform um eine Drehstrommaschine handeln. Somit kann die Steuervorrichtung ausgebildet sein, um einen Dreiphasenwechselstrom als das Wechselsignal an dem Aktuatoranschluss bereitzustellen. Die Endstufeneinrichtung kann auch als Wandler bezeichnet werden. Beispielsweise kann die Endstufeneinrichtung als ein Wechselrichter ausgeführt sein. Die Endstufeneinrichtung kann eine Brückenschaltung zum Wandeln der ersten Versorgungsspannung in das Wechselsignal aufweisen. Die Steuereinrichtung kann ausgebildet sein, um einen Betrieb des Aktuators durch eine geeignete Ansteuerung der Endstufeneinrichtung zu steuern. Beispielsweise kann das von der Steuereinrichtung bereitgestellte Steuersignal geeignet sein, um einen Brückentreiber der Endstufeneinrichtung oder Schalter der Endstufeneinrichtung anzusteuern. Um einen Betrieb der Steuereinrichtung auch bei Ausfall einer der Versorgungsspannungen aufrechterhalten zu können, kann eine zum Betreiben der Steuereinrichtung erforderliche Betriebsspannung sowohl unter Verwendung der ersten Versorgungsspannung als auch unter Verwendung der zweiten Versorgungsspannung generiert werden.

Die Steuereinrichtung kann ausgebildet sein, um das Steuersignal unter Verwendung eines einen Zustand des Aktuators anzeigenden Sensorsignals bereitzustellen. Unter dem Zustand kann beispielsweise eine Rotorlage eines Rotors des Aktuators oder eine Drehgeschwindigkeit des Rotors verstanden werden. Unter Kenntnis des Zustands kann eine Steuerung des Aktuators verbessert werden.

Dazu kann die Steuervorrichtung eine Sensoreinrichtung aufweisen, die ausgebildet ist, um das Sensorsignal zu erfassen und an die Steuereinrichtung bereitzustellen. Dabei kann die Sensoreinrichtung der ersten Potenzialseite zugeordnet sein. Indem die Sensoreinrichtung und die Steuereinrichtung auf derselben Potenzialseite angeordnet sind, ist eine sehr schnelle Signalübertragung zwischen Sensoreinrichtung und Steuereinrichtung möglich.

Die Steuereinrichtung kann ausgebildet sein, um das Steuersignal unter Verwendung eines einen Zustand der Endstufeneinrichtung anzeigenden weiteren Sensorsignals bereitzustellen. Beispielsweise kann das weitere Sensorsignal einen Stromverlauf oder Spannungsverlauf innerhalb der Endstufeneinrichtung anzeigen. Durch Kenntnis des Zustands der Endstufeneinrichtung kann die Ansteuerung der Endstufeneinrichtung sowie des Aktuators verbessert werden.

Entsprechend kann die Steuervorrichtung eine weitere Sensoreinrichtung aufweisen, die ausgebildet ist, um das weitere Sensorsignal zu erfassen und an die Steuereinrichtung bereitzustellen. Dabei kann die weitere Sensoreinrichtung der ersten Potenzialseite zugeordnet sein. Indem die Sensoreinrichtung und die Steuereinrichtung auf derselben Potenzialseite angeordnet sind, wird eine sehr schnelle Signalübertragung zwischen Sensoreinrichtung und Steuereinrichtung ermöglicht. Gemäß einer Ausführungsform kann die Steuervorrichtung eine Filtereinrichtung und eine Zwischenkreiseinrichtung umfassen, die in Serie zwischen den ersten Versorgungsspannungsanschluss und die Endstufeneinrichtung geschaltet sind. Durch eine Filtereinrichtung können die erste Versorgungsspannung überlagernde Störungen herausgefiltert werden. Durch eine solche Filtereinrichtung können beispielsweise auch Anforderungen bezüglich der elektromagnetischen Verträglichkeit gewährleistet werden. Die Zwischenkreiseinrichtung kann als Energiespeicher dienen, um beispielsweise der Endstufeneinrichtung eingangseitig fortlaufend ausreichend elektrische Energie zur Verfügung stellen zu können.

Die Steuervorrichtung umfasst einen Kommunikationsanschluss zum Anschließen der Steuervorrichtung an eine Kommunikationsleitung des Fahrzeugs wobei der Kommunikationsanschluss der zweiten Potenzialseite zugeordnet ist und die galvanische Trenneinrichtung ausgebildet ist, um den Kommunikationsanschluss galvanisch von einer der ersten Potenzialseite zugeordneten internen Kommunikationsleitung der Steuervorrichtung zu trennen. Über die Kommunikationsleitungen kann beispielsweise eine Soll-Vorgabe für den Betrieb des Aktuators übertragen werden.

Vorteilhafterweise kann die interne Kommunikationsleitung mit der Steuereinrichtung verbunden sein. Auf diese Weise kann ein Betrieb der Steuereinrichtung über den Kommunikationsanschluss gesteuert werden. In umgekehrter Richtung können Daten der Steuereinrichtung über den Kommunikationsanschluss ausgegeben werden.

Eine Fahrwerkskomponente für ein Fahrzeug weist einen Aktuator und eine genannte Steuervorrichtung auf, wobei der Aktuatoranschluss der Steuervorrichtung über zumindest eine Leitung mit einem Anschluss des Aktuators verbunden ist. Bei einem Aktuator in Form eines Drehstrommotors kann der Aktuatoranschluss über drei Phasenleitungen mit drei Anschlüssen des Aktuators verbunden sein. Beispielsweise kann der Aktuator verwendet werden, um ein Stellelement der Fahrwerkskomponente zu bewegen.

Beispielsweise kann die Fahrwerkskomponente als ein Wankstabilisator für das Fahrzeug ausgeführt sein. Dabei kann der Wankstabilisator zwei Stabilisatorelemente umfassen, die zum Bewirken einer eine Wankbewegung des Fahrzeugs beeinflussenden Relativbewegung zwischen den Stabilisatorelementen über den Aktuator miteinander gekoppelt sein. Unter Verwendung der genannten Steuervorrichtung kann Wankbewegungen besonders schnell entgegengewirkt werden.

Gemäß einer weiteren Ausführungsform kann die Fahrwerkskomponente als eine Lenkeinrichtung, beispielsweise als eine Hinterachslenkung, für das Fahrzeug ausgeführt sein. Dabei kann die Lenkeinrichtung ein mit einem Rad des Fahrzeugs koppelbares Lenkelement umfassen, das zum Bewirken einer Lenkbewegung des Rads mit dem Aktuator gekoppelt ist.
- Fig. 1: eine schematische Darstellung einer Steuervorrichtung gemäß einem Ausführungsbeispiel der vorliegenden Erfindung;
- Fig. 2: eine schematische Darstellung einer Steuervorrichtung und

- Fig. 3: ein Fahrzeug mit Fahrwerkskomponenten gemäß Ausführungsbeispielen der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

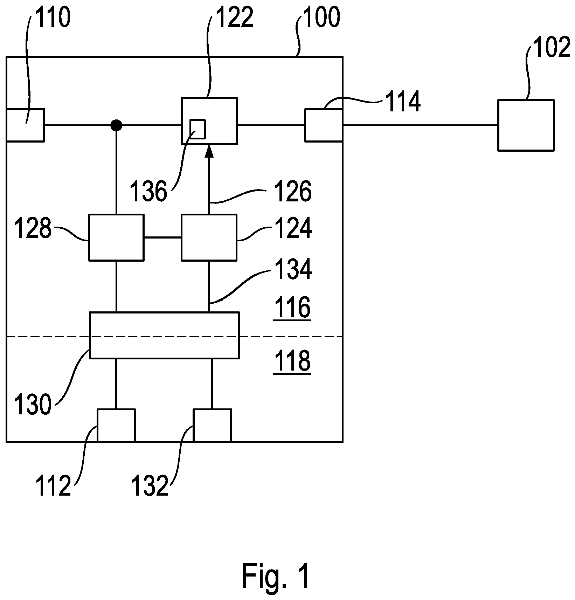

Fig. 1 zeigt eine schematische Darstellung einer Steuervorrichtung 100 gemäß einem Ausführungsbeispiel der vorliegenden Erfindung. Die Steuervorrichtung 100 wird zum Steuern eines Betriebs eines Aktuators 102 eingesetzt, der beispielsweise in einem Fahrzeug als Teil einer Fahrwerkskomponente verbaut sein kann.

Die Steuervorrichtung 100 weist einen ersten Versorgungsspannungsanschluss 110, einen zweiten Versorgungsspannungsanschluss 112 und einen Aktuatoranschluss 114 auf. Die Steuervorrichtung 100 ist in eine erste Potenzialseite 116 und in eine zweite Potenzialseite 118 unterteilt, die durch eine galvanische Trenneinrichtung 120 der Steuervorrichtung 100 galvanisch voneinander getrennt sind. Gemäß einem Ausführungsbeispiel ist die Steuervorrichtung 100 als ein elektrisches Gerät ausgeführt, das von einem Gehäuse umschlossen ist. In diesem Fall stellen die Anschlüsse 110, 112, 114 elektrische Schnittstellen des Geräts dar. Der erste Versorgungsspannungsanschluss 110 ist der ersten Potenzialseite 116 zugeordnet und vorgesehen, um die Steuervorrichtung 100 mit einer ersten Versorgungsspannung zu versorgen. Der zweite Versorgungsspannungsanschluss 112 ist der zweiten Potenzialseite 118 zugeordnet und vorgesehen, um die Steuervorrichtung 100 mit einer zweiten Versorgungsspannung zu versorgen, die sich von der ersten Versorgungsspannung unterscheidet. Bei einem Einsatz in einem Fahrzeug können die beiden Versorgungsspannungen beispielsweise von unterschiedlichen Bordnetzen bereitgestellt werden. Bei den ersten Versorgungsspannungen handelt es sich gemäß diesem Ausführungsbeispiel um Gleichspannungen.

Die Steuervorrichtung 100 ist ausgebildet, um unter Verwendung der ersten Versorgungsspannung den Wechselstrom zum Betreiben des Aktuators 102 zu erzeugen und an dem Aktuatoranschluss 114 auszugeben. Dazu weist die Steuervorrichtung 100 eine Endstufeneinrichtung 122 auf, die ausgebildet ist, um die erste Versorgungsspannung in eine Wechselspannung zu wandeln. Gemäß einem Ausführungsbeispiel ist die Endstufeneinrichtung 122 als ein Wandler oder Wechselrichter ausgeführt. Eingangseitig ist die Endstufeneinrichtung 122 direkt oder über weitere Einrichtungen, wie beispielsweise einer Filtereinrichtung oder einer Zwischenkreiseinrichtung, mit dem ersten Versorgungsspannungsanschluss 110 verbunden. Ausgangsseitig ist die Endstufeneinrichtung 122 mit dem Aktuatoranschluss 114 verbunden.

Eine Steuereinrichtung 124 ist ausgebildet, um einen Betrieb der Endstufeneinrichtung 122 und somit einen Betrieb des Aktuators 102 zu steuern. Dazu ist die Steuereinrichtung 124 ausgebildet, um ein Steuersignal 126 zu generieren und an die Endstufeneinrichtung 122 bereitzustellen. Beispielsweise kann das Steuersignal 126 geeignet sein, um einen Brückentreiber der Endstufeneinrichtung 122 anzusteuern. Gemäß einem Ausführungsbeispiel ist das Steuersignal 126 geeignet, um einen sicheren Zustand des Aktuators 102 herbeizuführen. Dazu kann die Endstufeneinrichtung 122 über das Steuersignal 126 so angesteuert werden, dass beispielsweise Leitungen innerhalb der Endstufeneinrichtung 122 oder zu dem Aktuatoranschluss 114 führende Ausgangsleitungen der Endstufeneinrichtung 122 unterbrochen oder kurzgeschlossen werden.

Die Steuereinrichtung 124 und die Endstufeneinrichtung 122 sind beide auf der ersten Potenzialseite 116 angeordnet. Auf diese Weise kann das Steuersignal 126 direkt, ohne das Erfordernis einer galvanischen Trennung, an die Endstufeneinrichtung 122 bereitgestellt werden. Dadurch kann die Endstufeneinrichtung 122 sehr schnell angesteuert werden.

Eine Betriebsspannung zum Betreiben der Steuereinrichtung 124 wird von einer Spannungsversorgungseinrichtung 128 an die Steuereinrichtung 124 bereitgestellt. Die Spannungsversorgungseinrichtung 128 ist ausgebildet, um die Betriebsspannung entweder unter Verwendung der an dem ersten Versorgungsspannungsanschluss 110 anliegenden ersten Versorgungsspannung oder unter Verwendung der an dem zweiten Versorgungsspannungsanschluss 112 anliegenden zweiten Versorgungsspannung bereitzustellen. Auf diese Weise kann eine Versorgung der Steuereinrichtung 124 mit der Betriebsspannung auch dann gewährleistet werden, wenn eine der Versorgungsspannungen ausfällt. Dies ist vorteilhaft, da in einem solchen Fall gegebenenfalls eine gesteuerte Überführung des Aktuators 102 in einen sicheren Zustand erforderlich ist. Die Spannungsversorgungseinrichtung 128 ist auf der ersten Potenzialseite 116 angeordnet. Somit ist eine galvanische Trennung zwischen der Spannungsversorgungseinrichtung 128 und dem zweiten Versorgungsspannungsanschluss 112 erforderlich. Dazu ist eine galvanische Trenneinrichtung 130 zwischen den zweiten Versorgungsspannungsanschluss 112 und die Spannungsversorgungseinrichtung 128 geschaltet.

Gemäß einem Ausführungsbeispiel weist die Steuervorrichtung 100 einen Kommunikationsanschluss 132 auf, über den die Steuervorrichtung 100 an eine externe Kommunikationsleitung angeschlossen werden kann. Über den Kommunikationsanschluss 132 kann beispielsweise eine Soll-Vorgabe für einen Betrieb des Aktuators empfangen werden. Zusätzlich oder alternativ können beispielsweise innerhalb der Steuereinrichtung 124 vorliegende Daten über den Kommunikationsanschluss 132 ausgegeben werden. Dazu ist die Steuereinrichtung 124 gemäß einem Ausführungsbeispiel über eine interne Kommunikationsleitung 134 mit dem Kommunikationsanschluss 132 verbunden. Nachdem der Kommunikationsanschluss 132 und die Steuereinrichtung 124 auf unterschiedlichen Potenzialseiten der Vorrichtung 100 liegen, ist eine galvanische Trennung erforderlich, die gemäß diesem Ausführungsbeispiel unter Verwendung der Trenneinrichtung 130 durchgeführt wird.

Gemäß einem Ausführungsbeispiel ist die Steuereinrichtung 124 ausgebildet, um zumindest ein Sensorsignal zu empfangen und zur Bereitstellung des Steuersignals 126 zu verwenden. Das Sensorsignal kann Daten übermitteln, die beispielsweise einen Zustand der Endstufeneinrichtung 122 oder einen Zustand des Aktuators 102 anzeigen. Dazu umfasst die Steuervorrichtung 100 gemäß einem Ausführungsbeispiel eine Sensoreinrichtung 136, die mit der Endstufeneinrichtung 122 gekoppelt ist oder in die Endstufeneinrichtung 122 integriert ist. Zusätzlich oder alternativ kann die Steuervorrichtung 100 eine Sensoreinrichtung aufweisen, die mit dem Aktuator 102 gekoppelt ist. Alternativ kann die Steuervorrichtung 100 zumindest eine Schnittstelle zu einer solchen Sensoreinrichtung aufweisen.

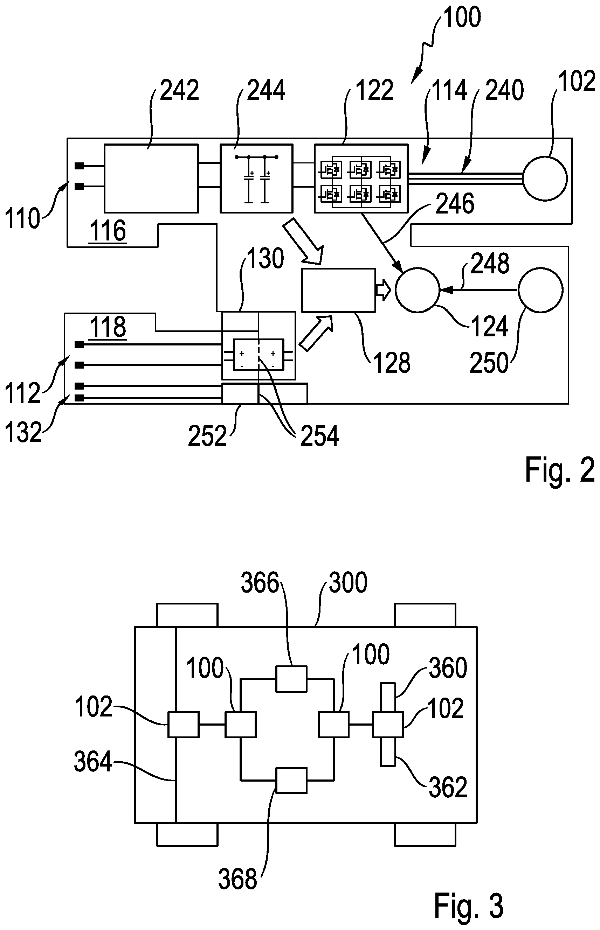

Fig. 2 eine schematische Darstellung einer Steuervorrichtung 100. Die Steuervorrichtung 100 ist vorgesehen, um einen Aktuator 102 zu steuern. Gemäß diesem Ausführungsbeispiel ist der Aktuator 102 als eine Drehstrommaschine ausgeführt und ist über drei Phasenleitungen 240 mit dem Aktuatoranschluss 114 der Steuervorrichtung 100 verbunden.

Die Endstufeneinrichtung 122 ist gemäß einem Ausführungsbeispiel als eine Endstufe ausgeführt, die eine Brückenschaltung, beispielsweise eine B6-Brücke (Sechspulsgleichrichter), umfasst. Die Brückenschaltung ist als eine Transistorschaltung ausgeführt. Die Brückenschaltung kann unter Verwendung zumindest eines von der Steuereinrichtung 124 bereitgestellten Steuersignals so gesteuert werden, das in die Phasenleitungen 240 zum Betreiben des Aktuators 102 geeignete Phasenströme eingespeist werden. Dazu kann entsprechend einem Ansteuermuster an jede der Phasenleitungen 240 jeweils alternierend die über den ersten Versorgungsspannungsanschluss 110 zugeführte erste Versorgungsspannung und ein, beispielsweise ebenfalls über den ersten Versorgungsspannungsanschluss 110 zugeführtes Bezugspotenzial der ersten Versorgungsspannung angelegt werden. Der erste Versorgungsspannungsanschluss 110 weist gemäß diesem Ausführungsbeispiel zwei Kontakte auf, die entsprechend der gebräuchlichen Klemmenbezeichnung den Klemmen KL40 und KL41 entsprechen. Somit ist der erste Versorgungsspannungsanschluss 110 geeignet, um die Steuervorrichtung 110 an ein 48V-Bordnetz eines Fahrzeugs anzuschließen. Somit handelt es sich gemäß diesem Ausführungsbeispiel bei der ersten Potenzialseite 116 der Steuervorrichtung 110 beispielhaft um eine 48V-Seite.

Der zweite Versorgungsspannungsanschluss 112 weist gemäß diesem Ausführungsbeispiel zwei Kontakte auf, von denen einer der Klemme KL30 und eventuell der KL15 und der andere der Klemme KL31 entspricht. Somit ist der zweite Versorgungsspannungsanschluss 112 geeignet, um die Steuervorrichtung 110 an ein 12V-Bordnetz eines Fahrzeugs anzuschließen. Somit handelt es sich gemäß diesem Ausführungsbeispiel bei der zweiten Potenzialseite 118 der Steuervorrichtung 110 beispielhaft um eine 12V-Seite.

Gemäß diesem Ausführungsbeispiel sind eine Filtereinrichtung 242 und eine Zwischenkreiseinrichtung 244 zwischen den ersten Versorgungsspannungsanschluss 110 und die Endstufeneinrichtung 122 geschaltet. Die Filtereinrichtung 242 ist als ein EMV-Filter ausgeführt. Die Zwischenkreiseinrichtung 244 ist als ein Zwischenkreis ausgeführt, der zumindest einen Kondensator umfasst.

Die Spannungsversorgungseinrichtung 128 ist als eine Spannungsversorgung zum Versorgen der Steuereinrichtung 124 ausgeführt, die gemäß diesem Ausführungsbeispiel als ein Mikrocontroller (µC) ausgeführt ist. Dazu kann die Spannungsversorgungseinrichtung 128 sowohl mit von der Zwischenkreiseinrichtung 244 als von der Trenneinrichtung 130 bereitgestellter elektrischer Energie versorgt werden.

Gemäß einem Ausführungsbeispiel ist die Steuereinrichtung 124 ausgebildet, um zumindest ein Sensorsignal 246 zu empfangen, das einen Zustand der Endstufeneinrichtung 122 anzeigt. Beispielsweise kann das Sensorsignal 246 von einer Sensoreinrichtung bereitgestellt werden, die ausgebildet ist, um eine Spannungsmessung und/oder eine Strommessung durchzuführen. Somit kann der Zustand der Endstufeneinrichtung 122 durch eine innerhalb der Endstufeneinrichtung 122 messbaren Spannung oder durch einen innerhalb der Endstufeneinrichtung 122 messbaren Strom repräsentiert werden. Das Sensorsignal 246 wird gemäß einem Ausführungsbeispiel von der Steuereinrichtung 124 verwendet, um die Endstufeneinrichtung 122 und somit den Aktuator 102 anzusteuern.

Gemäß einem Ausführungsbeispiel ist die Steuereinrichtung 124 ausgebildet, um zumindest ein Sensorsignal 248 von einer Sensoreinrichtung 250 in Form einer Sensorik zu empfangen. Die Sensoreinrichtung 250 ist ausgebildet, um einen Zustand des Aktuators 102 zu erfassen und über das Sensorsignal 248 anzuzeigen. Beispielsweise können mehrere Sensorsignale 248 von der Sensoreinrichtung 250 bereitgestellt werden, die Stellungen des Rotors des Aktuators 102 anzeigende Rotorlagesignale repräsentieren. Das zumindest eine Sensorsignal 248 wird gemäß einem Ausführungsbeispiel von der Steuereinrichtung 124 verwendet, um die Endstufeneinrichtung 122 und somit den Aktuator 102 anzusteuern.

Beispielsweise wird zumindest eines der Sensorsignale 246, 248 von der Steuereinrichtung 124 verwendet, um einen aktuellen Betriebszustand des Aktuators 102 mit einer Soll-Vorgabe für den Betrieb zu vergleichen. Zusätzlich oder alternativ wird zumindest eines der Sensorsignale 246, 248 von der Steuereinrichtung 124 verwendet, um den Betrieb des Aktuators 102 zu regeln.

Der Kommunikationsanschluss 132 der Steuervorrichtung 100 dient gemäß diesem Ausführungsbeispiel der Kommunikation und ist als eine Schnittstelle zu einem CAN-Bus ausgeführt. Eine galvanische Trennung des Kommunikationsanschlusses 132 gegenüber der ersten Potenzialseite 116 der Steuervorrichtung 100 wird gemäß diesem Ausführungsbeispiel unter Verwendung einer weiteren galvanischen Trenneinrichtung 252 durchgeführt. Die Trenneinrichtungen 130, 252 sind ausgebildet, um eine nötige galvanische Trennung 254 bereitzustellen.

Der beschriebene Ansatz wird gemäß einem Ausführungsbeispiel im Rahmen eines Hardware-Konzepts für eine Steuervorrichtung 100 in Form eines 48V-Steuergeräts als Wankstabilisator umgesetzt. Bei dem Wankstabilisator handelt es sich insbesondere um einen elektromechanischen Wankstabilisator. Somit kann der beschriebene Ansatz vorteilhaft in der Fahrwerktechnik eingesetzt werden. Neben dem Einsatz bei Steuergeräten für Wankstabilisierungen ist auch der Einsatz bei Steuergeräten für Lenkungen, insbesondere Hinterachslenkungen, sinnvoll.

Die gezeigte Steuervorrichtung 100 zeichnet sich durch die verwendeten Hardware-Baugruppen in Form der Einrichtungen 122, 124, 128, 130, 242, 244, 252, 250 und deren Aufteilung in Bezug auf die Potenzialseiten 116, 118 der Steuervorrichtung 100 aus. Für den Einsatz bei Fahrwerkskomponenten mit Schnittstelle zu zwei Bordnetzen ist die Aufteilung der Baugruppen gerade nicht so gewählt, dass jede Signalerfassung auf der 48V Seite galvanisch getrennt auf die 12V Seite gebracht werden muss, was Verzögerungszeiten bei Regelkreisen bringen würde. Durch die gewählte und in Fig. 3 gezeigte Aufteilung der Baugruppen können die Signalverzögerungszeiten für die Regelung sehr gering gehalten werden. Zudem ergibt sich ein Kosten- und Bauraum-Vorteil, da sehr wenige Signale galvanisch getrennt zu übertragen sind. Zusätzlich besteht der Vorteil, dass im Fehlerfall, beispielsweise bei keiner Versorgung, sehr schnell der sichere Zustand eingeleitet werden kann, da die Steuereinrichtung 124, beispielsweise in Form eines Controllers, sehr schnell versorgt werden kann.

Gemäß einem Ausführungsbeispiel ist die Steuervorrichtung 100 als ein Steuergerät mit einer Versorgung aus zwei Bordnetzen ausgeführt, die intern im Steuergerät galvanisch getrennt behandelt werden. Dabei wird die Aufteilung der Baugruppen innerhalb des Steuergeräts derart gestaltet, dass die Steuereinrichtung 124, beispielsweise ein Mikrocontroller, auf der ersten Potenzialseite 116, hier der 48V Seite ist und dort versorgt wird, die Signalerfassung, beispielsweise die Erfassung der Sensorsignale 246, 248, für die Aktuatorregelung auf der ersten Potenzialseite 116, hier auf der 48V Seite oder Lastseite erfolgt, und der sichere Zustand des Aktuators 102 durch schnelle Signalerfassung und durch die Möglichkeit eines schnellen Weckens der Steuereinrichtung 124 eingeleitet werden kann.

Diese Topologie kann für weitere 48V Steuergeräte oder auch für Steuergeräte mit anderen Versorgungsspannungswerten eingesetzt werden, die eine schnelle Aktuatorregelung benötigen bzw. eine sehr dynamische Aktuatorregelung benötigen. Fig. 3 zeigt ein Fahrzeug 300, das beispielhaft zwei Fahrwerkskomponenten gemäß Ausführungsbeispielen der vorliegenden Erfindung aufweist. Jede der Fahrwerkskomponenten weist zumindest einen Aktuator 102 auf, dessen Betrieb jeweils über eine Steuervorrichtung 100 gesteuert wird, wie sie anhand der vorangegangenen Figuren beschrieben ist.

Eine der Fahrwerkskomponenten ist als ein Wankstabilisator ausgeführt, über den eine Wankbewegung des Fahrzeugs 300 beeinflusst, beispielsweise gedämpft werden kann. Dazu weist der Wankstabilisator zwei Stabilisatorelemente 360, 362 auf, die zum Beeinflussen der Wankbewegung relativ zueinander bewegt werden können. Dazu sind die Stabilisatorelemente 360, 362 über einen Aktuator 102 miteinander gekoppelt, der unter Verwendung einer Steuervorrichtung 100 so angesteuert werden kann, dass die Stabilisatorelemente 360, 362 eine für eine gewünschte Beeinflussung der Wankbewegung geeignete Relativbewegung zueinander ausführen.

Die andere der Fahrwerkskomponenten ist als eine Lenkeinrichtung ausgeführt, über die zumindest ein Rad des Fahrzeugs 300 eingelenkt werden kann. Dazu weist die Lenkeinrichtung zumindest ein Lenkelement 364 auf, das mit einem Rad des Fahrzeugs 300 gekoppelt ist und zum Lenken des Rades unter Verwendung eines Aktuators 102 bewegt werden kann. Der Aktuator 102 wird wiederum unter Verwendung einer Steuervorrichtung 100 so angesteuert, dass das Lenkelement 364 eine für eine gewünschte Lenkbewegung des Rades geeignete Bewegung ausführt.

Gemäß einem Ausführungsbeispiel stellt die Lenkeinrichtung eine Hinterachslenkung dar, über die unter Verwendung eines Aktuators 102 oder zweier Aktuatoren 102 beide Hinterräder des Fahrzeugs 300 gelenkt werden können.

Gemäß diesem Ausführungsbeispiel weist das Fahrzeug 300 zwei Bordnetze 366, 368 auf. Die Steuervorrichtungen 100 sind über ihre ersten Versorgungsspannungsanschlüsse an das erste Bordnetz 366 und über ihre zweiten Versorgungsspannungsanschlüsse an das zweite Bordnetz 368 angeschlossen.

### Bezugszeichen

- 100: Steuervorrichtung
- 102: Aktuator
- 110: erster Versorgungsspannungsanschluss
- 112: zweiter Versorgungsspannungsanschluss
- 114: Aktuatoranschluss
- 116: erste Potenzialseite
- 118: zweite Potenzialseite
- 120: galvanische Trenneinrichtung
- 122: Endstufeneinrichtung
- 124: Steuereinrichtung
- 126: Steuersignal
- 128: Spannungsversorgungseinrichtung
- 130: galvanische Trenneinrichtung
- 132: Kommunikationsanschluss
- 134: interne Kommunikationsleitung
- 136: Sensoreinrichtung
- 240: Phasenleitungen
- 242: Filtereinrichtung
- 244: Zwischenkreiseinrichtung
- 246: Sensorsignal
- 248: Sensorsignal
- 250: Sensoreinrichtung
- 252: galvanische Trenneinrichtung
- 254: galvanische Trennung
- 300: Fahrzeug
- 360: Stabilisatorelement
- 362: Stabilisatorelement
- 364: Lenkelement
- 366: erstes Bordnetz
- 368: zweites Bordnetz

## Patentansprüche

1. Steuervorrichtung (100) für eine Fahrwerkskomponente für ein Fahrzeug (300), wobei die Steuervorrichtung (100) die folgenden Merkmale aufweist:
einen ersten Versorgungsspannungsanschluss (110) zum Versorgen der Steuervorrichtung (100) mit einer ersten Versorgungsspannung, wobei der erste Versorgungsspannungsanschluss (110) einer ersten Potenzialseite (116) der Steuervorrichtung (100) zugeordnet ist;
einen zweiten Versorgungsspannungsanschluss (112) zum Versorgen der Steuervorrichtung (100) mit einer zweiten Versorgungsspannung, wobei der zweite Versorgungsspannungsanschluss (112) einer zweiten Potenzialseite (118) der Steuervorrichtung (100) zugeordnet ist;
einen Aktuatoranschluss (114) zum Bereitstellen eines Wechselsignals zum Betreiben eines Aktuators (102) der Fahrwerkskomponente, wobei der Aktuatoranschluss (114) der ersten Potenzialseite (116) der Steuervorrichtung (100) zugeordnet ist;
eine Endstufeneinrichtung (122), die zwischen den ersten
Versorgungsspannungsanschluss (110) und den Aktuatoranschluss (114) geschaltet ist und ausgebildet ist, um das Wechselsignal unter Verwendung der ersten Versorgungsspannung bereitzustellen, wobei die Endstufeneinrichtung (122) der ersten Potenzialseite (116) der Steuervorrichtung (100) zugeordnet ist;
eine Spannungsversorgungseinrichtung (128), die ausgebildet ist, um wahlweise unter Verwendung der ersten Versorgungsspannung oder der zweiten Versorgungsspannung eine Betriebsspannung bereitzustellen, wobei die Spannungsversorgungseinrichtung (128)der ersten Potenzialseite (116) der Steuervorrichtung (100) zugeordnet ist;
eine galvanische Trenneinrichtung (130) die zwischen den zweiten Versorgungsspannungsanschluss (112) und die Spannungsversorgungseinrichtung (128) geschaltet ist, und ausgebildet ist, um die erste Potenzialseite (116) galvanisch von der zweiten Potenzialseite (118) zu trennen; und
eine Steuereinrichtung (124), die ausgebildet ist, um unter Verwendung der Betriebsspannung ein Steuersignal (126) zum Steuern der Endstufeneinrichtung (122) bereitzustellen, wobei die Steuereinrichtung (124) der ersten Potenzialseite (116) zugeordnet ist;
**gekennzeichnet durch**
einen Kommunikationsanschluss (132) zum Anschließen der Steuervorrichtung (100) an eine Kommunikationsleitung des Fahrzeugs (300), wobei der Kommunikationsanschluss (132) der zweiten Potenzialseite (118) zugeordnet ist und wobei die galvanische Trenneinrichtung (130) ausgebildet ist, um den Kommunikationsanschluss (132) galvanisch von einer der ersten Potenzialseite (116) zugeordneten internen Kommunikationsleitung (134) der Steuervorrichtung (100) zu trennen.

2. Steuervorrichtung (100) gemäß Anspruch 1, **dadurch gekennzeichnet, dass** die Steuereinrichtung (124) ausgebildet ist, um das Steuersignal (126) unter Verwendung eines einen Zustand des Aktuators (102) anzeigenden Sensorsignals (248) bereitzustellen.

3. Steuervorrichtung (100) gemäß Anspruch 2, **gekennzeichnet durch** eine Sensoreinrichtung (250), die ausgebildet ist, um das Sensorsignal (248) zu erfassen und an die Steuereinrichtung (124) bereitzustellen, wobei die Sensoreinrichtung (250) der ersten Potenzialseite (116) zugeordnet ist.

4. Steuervorrichtung (100) gemäß einem der vorangegangenen Ansprüche, **dadurch gekennzeichnet, dass** die Steuereinrichtung (124) ausgebildet ist, um das Steuersignal (126) unter Verwendung eines einen Zustand der Endstufeneinrichtung (122) anzeigenden weiteren Sensorsignals (246) bereitzustellen.

5. Steuervorrichtung (100) gemäß Anspruch 4, **gekennzeichnet durch** eine weitere Sensoreinrichtung (136), die ausgebildet ist, um das weitere Sensorsignal (246) zu erfassen und an die Steuereinrichtung (124) bereitzustellen, wobei die weitere Sensoreinrichtung (136) der ersten Potenzialseite (116) zugeordnet ist.

6. Steuervorrichtung (100) gemäß einem der vorangegangenen Ansprüche, **gekennzeichnet durch** eine Filtereinrichtung (242) und eine Zwischenkreiseinrichtung (244), die in Serie zwischen den ersten Versorgungsspannungsanschluss (110) und die Endstufeneinrichtung (122) geschaltet sind.

7. Steuervorrichtung (100) gemäß einem der vorangegangenen Ansprüche, **dadurch gekennzeichnet, dass** die interne Kommunikationsleitung (134) mit der Steuereinrichtung (124) verbunden ist.

8. Fahrwerkskomponente für ein Fahrzeug (300), **dadurch gekennzeichnet, dass** die Fahrwerkskomponente einen Aktuator (102) und eine Steuervorrichtung (100) gemäß einem der vorangegangenen Ansprüche aufweist, wobei der Aktuatoranschluss (114) der Steuervorrichtung (100) über zumindest eine Leitung (240) mit einem Anschluss des Aktuators (102) verbunden ist.

9. Fahrwerkskomponente gemäß Anspruch 8, **dadurch gekennzeichnet, dass** die Fahrwerkskomponente als ein Wankstabilisator für das Fahrzeug (300) ausgeführt ist, wobei der Wankstabilisator zwei Stabilisatorelemente (360, 362) umfasst, die zum Bewirken einer eine Wankbewegung des Fahrzeugs (300) beeinflussenden Relativbewegung zwischen den Stabilisatorelementen (360, 362) über den Aktuator (102) miteinander gekoppelt sind.

10. Fahrwerkskomponente gemäß Anspruch 8, **dadurch gekennzeichnet, dass** die Fahrwerkskomponente als eine Lenkeinrichtung, insbesondere eine Hinterachslenkung, für das Fahrzeug (300) ausgeführt ist, wobei die Lenkeinrichtung ein mit einem Rad des Fahrzeugs (300) koppelbares Lenkelement (364) umfasst, das zum Bewirken einer Lenkbewegung des Rads mit dem Aktuator (102) gekoppelt ist.

## Claims

1. Control device (100) for a chassis component for a vehicle (300), wherein the control device (100) has the following features:
a first supply voltage terminal (110) for supplying the control device (100) with a first supply voltage, wherein the first supply voltage terminal (110) is assigned to a first potential side (116) of the control device (100);
a second supply voltage terminal (112) for supplying the control device (100) with a second supply voltage, wherein the second supply voltage terminal (112) is assigned to a second potential side (118) of the control device (100);
an actuator terminal (114) for providing an AC signal for operating an actuator (102) of the chassis component, wherein the actuator terminal (114) is assigned to the first potential side (116) of the control device (100);
an output stage means (122), which is connected between the first supply voltage terminal (110) and the actuator terminal (114) and is designed to provide the AC signal by using the first supply voltage, wherein the output stage means (122) is assigned to the first potential side (116) of the control device (100);
a voltage supply means (128), which is designed to provide an operating voltage optionally by using the first supply voltage or the second supply voltage, wherein the voltage supply means (128) is assigned to the first potential side (116) of the control device (100);
a galvanic isolation means (130), which is connected between the second supply voltage terminal (112) and the voltage supply means (128) and is designed to isolate the first potential side (116) galvanically from the second potential side (118); and
a controller (124), which is designed to provide a control signal (126) for controlling the output stage means (122) by using the operating voltage, wherein the controller (124) is assigned to the first potential side (116);
**characterized by**
a communication terminal (132) for connecting the control device (100) to a communication line of the vehicle (300), wherein the communication terminal (132) is assigned to the second potential side (118), and wherein the galvanic isolation means (130) is designed to isolate the communication terminal (132) galvanically from an internal communication line (134) of the control device (100) which is assigned to the first potential side (116).

2. Control device (100) according to Claim 1, **characterized in that** the controller (124) is designed to provide the control signal (126) by using a sensor signal (248) indicating a state of the actuator (102).

3. Control device (100) according to Claim 2, **characterized by** a sensor means (250), which is designed to detect the sensor signal (248) and provide it to the controller (124), wherein the sensor means (250) is assigned to the first potential side (116).

4. Control device (100) according to one of the preceding claims, **characterized in that** the controller (124) is designed to provide the control signal (126) by using a further sensor signal (246) indicating a state of the output stage means (122).

5. Control device (100) according to Claim 4, **characterized by** a further sensor means (136), which is designed to detect the further sensor signal (246) and provide it to the controller (124), wherein the further sensor means (136) is assigned to the first potential side (116).

6. Control device (100) according to one of the preceding claims, **characterized by** a filter means (242) and an intermediate circuit means (244), which are connected in series between the first supply voltage terminal (110) and the output stage means (122).

7. Control device (100) according to one of the preceding claims, **characterized in that** the internal communication line (134) is connected to the controller (124).

8. Chassis component for a vehicle (300), **characterized in that** the chassis component has an actuator (102) and a control device (100) according to one of the preceding claims, wherein the actuator terminal (114) of the control device (100) is connected via at least one line (240) to a terminal of the actuator (102).

9. Chassis component according to Claim 8, **characterized in that** the chassis component is implemented as a roll stabilizer for the vehicle (300), wherein the roll stabilizer comprises two stabilizer elements (360, 362) which are coupled to each other via the actuator (102) to effect a relative movement between the stabilizer elements (360, 362) that influences a rolling movement of the vehicle (300).

10. Chassis component according to Claim 8, **characterized in that** the chassis component is implemented as a steering means, in particular a rear axle steering means, for the vehicle (300), wherein the steering means comprises a steering element (364) which can be coupled to a wheel of the vehicle (300) and which is coupled to the actuator (102) in order to effect a steering movement of the wheel.

## Revendications

1. Dispositif de commande (100) pour un composant de châssis d'un véhicule (300), dans lequel le dispositif de commande (100) présente les caractéristiques suivantes :
une première borne de tension d'alimentation (110) permettant d'alimenter le dispositif de commande (100) avec une première tension d'alimentation, dans lequel la première borne de tension d'alimentation (110) est associée à un premier côté potentiel (116) du dispositif de commande (100) ;
une deuxième borne de tension d'alimentation (112) permettant d'alimenter ledit dispositif de commande (100) avec une deuxième tension d'alimentation, dans lequel la deuxième borne de tension d'alimentation (112) est associée à un deuxième côté potentiel (118) du dispositif de commande (100) ;
une borne d'actionneur (114) permettant de fournir un signal alternatif pour faire fonctionner un actionneur (102) du composant de châssis, dans lequel la borne d'actionneur (114) est associée au premier côté potentiel (116) du dispositif de commande (100) ;
un moyen d'étage final (122) qui est connecté entre la première borne de tension d'alimentation (110) et la borne d'actionneur (114) et est conçu pour fournir le signal alternatif en utilisant ladite première tension d'alimentation, dans lequel le moyen d'étage final (122) est associé au premier côté potentiel (116) du dispositif de commande (100) ;
un moyen d'alimentation en tension (128) conçu pour fournir sélectivement une tension de service en utilisant la première tension d'alimentation ou la deuxième tension d'alimentation, dans lequel le moyen d'alimentation en tension (128) est associé au premier côté potentiel (116) du dispositif de commande (100) ;
un moyen de séparation galvanique (130) qui est connecté entre la deuxième borne de tension d'alimentation (112) et le moyen d'alimentation en tension (128) et est conçu pour séparer galvaniquement le premier côté potentiel (116) du deuxième côté potentiel (118) ; et
un moyen de commande (124) conçu pour fournir un signal de commande (126) permettant de commander le moyen d'étage final (122) en utilisant la tension de service, dans lequel le moyen de commande (124) est associé au premier côté potentiel (116) ;
**caractérisé par**
un port de communication (132) permettant de raccorder le dispositif de commande (100) à une ligne de communication du véhicule (300), dans lequel le port de communication (132) est associé au deuxième côté potentiel (118) et dans lequel le moyen de séparation galvanique (130) est conçu pour séparer galvaniquement le port de communication (132) d'une ligne de communication interne (134) du dispositif (100) qui est associée au premier côté potentiel (116).

2. Dispositif de commande (100) selon la revendication 1, **caractérisé en ce que** le moyen de commande (124) est conçu pour fournir le signal de commande (126) en utilisant un signal de capteur (248) indiquant un état de l'actionneur (102).

3. Dispositif de commande (100) selon la revendication 2, **caractérisé par** un moyen capteur (250) qui est conçu pour détecter le signal de capteur (248) et pour le fournir au moyen de commande (124), dans lequel le moyen capteur (250) est associé au premier côté potentiel (116).

4. Dispositif de commande (100) selon l'une des revendications précédentes, **caractérisé en ce que** le moyen de commande (124) est conçu pour fournir le signal de commande (126) en utilisant un autre signal de capteur (246) indiquant un état du moyen d'étage final (122).

5. Dispositif de commande (100) selon la revendication 4, **caractérisé par** un autre moyen capteur (136) qui est conçu pour détecter l'autre signal de capteur (246) et pour le fournir au moyen de commande (124), dans lequel l'autre moyen capteur (136) est associé au premier côté potentiel (116).

6. Dispositif de commande (100) selon l'une des revendications précédentes, **caractérisé par** un moyen de filtrage (242) et un moyen de circuit intermédiaire (244) qui sont connectés en série entre la première borne de tension d'alimentation (110) et le moyen d'étage final (122) .

7. Dispositif de commande (100) selon l'une des revendications précédentes, **caractérisé en ce que** la ligne de communication interne (134) est reliée au moyen de commande (124).

8. Composant de châssis pour un véhicule (300), **caractérisé en ce que** le composant de châssis comprend un actionneur (102) et un dispositif de commande (100) selon l'une des revendications précédentes, dans lequel la borne d'actionneur (114) du dispositif de commande (100) est reliée à une borne de l'actionneur (102) par l'intermédiaire d'au moins une ligne (240).

9. Composant de châssis selon la revendication 8, **caractérisé en ce que** le composant de châssis est réalisé sous la forme d'un stabilisateur de roulis pour le véhicule (300), dans lequel le stabilisateur de roulis comprend deux éléments stabilisateurs (360, 362) qui sont couplés l'un à l'autre par l'intermédiaire de l'actionneur (102) pour provoquer un mouvement relatif entre les éléments stabilisateurs (360, 362) influençant un déplacement de roulis du véhicule (300).

10. Composant de châssis selon la revendication 8, **caractérisé en ce que** le composant de châssis est réalisé sous la forme d'un moyen de direction, en particulier une direction d'essieu arrière, du véhicule (300), dans lequel le moyen de direction est un élément de direction (364) pouvant être couplé à une roue du véhicule (300), qui est couplé à l'actionneur (102) pour provoquer un mouvement de direction de la roue.
